# EUROPÄISCHE PATENTANMELDUNG

(11) **EP 0 886 109 A2**
(43) Veröffentlichungstag der Anmeldung: **23.12.1998**
(21) Anmeldenummer: 98111032.3
(22) Anmeldetag: 16.06.1998
(51) Int. Cl.: F24D 3/14, F24D 11/00, F24F 5/00

(54) **Verfahren zum Betrieb einer Bodenheizung und Mittel zur Durchführung des Verfahrens**

(30) Priorität: 16.06.1997 AT 362/97; 02.07.1997 CH 1604/97
(71) Anmelder: Nägelebau GmbH & Co., 6832 Röthis (AT)
(72) Erfinder: Nägele, Wolfgang, 6830 Rankweil (AT)
(74) Vertreter: Patentanwälte Westphal, Buchner, Mussgnug Neunert, Göhring

(57) **Zusammenfassung**

Es wird vorgeschlagen, die Raumtemperatur mit einem Verfahren zu erzeugen, bei dem das Gebäude mit geothermischer Energie gespiesen wird. Die Energieabgabe erfolgt über Boden- und/oder Deckenplatten aus Beton, in denen ein Rohrsy<stem verlegt ist zur Umwälzung eines Wärmetransportmediums. Hierzu wird ein vorgefertigtes Betonelement verwendet. Dieses hat beispielsweise eine Zugplatte (20) und eine Druckplatte (40), die über Längsstege (30) monolithisch miteinander verbunden sind. In der monolithischen Betonplatte sind die Roihre (3) des Heiz- bzw. Kühlregisters verlegt sowie die entsprechenden Druck- bzw. Zugarmierungen. Zugplatte und Druckplatte können aber auch direkt übereinander verlaufend monolithisch gestaltet sein, wobei nur die Zugplatte als vorgefertigtes Betonelement hergestellt wäre.

## Beschreibung

Die vorliegende Erfindung betrifft ein Verfahren zur Raumtemperaturerzeugung in einem hierzu über eine Sonde mittels geothermischer Energie gespiesenen Gebäude mit Boden- und/oder Deckenplatten aus Beton und einem Rohrsystem, in dem ein Wärmetransportmedium umgewälzt wird. Die Erfindung betrifft ferner Mittel zur Ausübung dieses Verfahrens.

Sogenannte Bodenheizungen oder Deckenheizungen sind bereits seit vielen Jahren bekannt. Es sind dies Heizungen, bei denen auf oder unter der Boden- und /oder Deckenplatte ein Rohrsystem verlegt ist, durch welches ein Wärmetransportmedium gepumpt wird. Das Wärmetransportmedium kann dabei auf verschiedenste Arten erwärmt werden mittels erneuerbaren oder nichterneuerbaren Energien, wie beispielsweise Erd- oder Biogas, Kohle, Holz oder Heizöl oder mittels Solar- oder geothermischer Energie. Dabei kennt man insbesondere zwei verschiedene Betriebsverfahren, nämlich schnellansprechende Heizanlagen, die im Hoch- oder Mitteltemperaturbereich arbeiten und eher träge Systeme, die im Niedertemperaturbereich arbeiten. Im Niedertemperaturbereich wird eine solche Heizanlage bei Temperaturen von üblicherweise 25-35°C betrieben.

Die bereits erwähnten Heizungsanlagen im Hoch- bzw. Mitteltemperaturbereich arbeiten bei Temperaturen von ca. 30-70°C.

Ueblicherweise wird bei den bekannten Heizungsanlagen die Heizung aufgrund der ermittelten Raumtemperatur betrieben. Wird eine Abweichung des Istwertes vom Sollwert festgestellt, so springt die Heizung an und die gewünschte Endtemperatur soll möglichst schnell erreicht werden. Hierbei spielen verschiedene Faktoren eine Rolle. Je grösser der Temperaturgradient zwischen Heizungstemperatur und Raumtemperatur ist, um so schneller ist die Heizung spürbar wirksam. Hierbei neigt man natürlich immer auch zur Uebersteuerung des Systems. Eine weitere Grösse, die zu berücksichtigen ist, ist die Grösse der Oberfläche, die der Wärmekonduktion bzw. Wärmeradiation dient. Bei Bodenheizungen und Deckenheizungen wird meist vollflächig gefahren, so dass dies kaum mehr eine variable Grösse ist. Die Trägheit des Systemes ist auch davon abhängig, wie tief die Rohre unterhalb der Konduktions- bzw. Konvektionsflächen liegen. Von dieser Logik ausgehend hat man die Rohre immer direkt auf der Ober- oder Unterfläche der monolithischen Boden- und/oder Deckenplatte aus Beton befestigt. Bei grösseren Platten werden die Flächen in Teilflächen unterteilt und jede Teilfläche enthält ein in sich geschlossenes Rohrsystem. Ein solches Rohrsystem wird üblicherweise als Rohrregister bezeichnet. Die einzelnen Rohrregister sind dann über Vor- und Rücklaufstränge miteinander verbunden.

Um die Einsatzzeit der Heizungsanlage möglicht kurz zu halten, ist man auf kurze Ansprechzeiten angewiesen. Die kurzen Einsatzzeiten sind bei den meisten Energiearten auch gleich geringerem Energieaufwand. Entsprechend hat man die Register möglichst nahe an die Oberflächen verlegt bzw. möglichst flach gestaltet, so dass über die Betonplatte, auf der die Leitungen verlegt sind, eine möglichst niedrige Mörtel- oder Feinbetonschicht aufgetragen werden musste. Auch die Dichte der zu verlegenden Rohre pro m² hat die erwähnten Funktionen beeinflusst.

Auch bei der Verwendung von geothermischer Energie wurde bis heute nicht anders verfahren. Es wurden auch keine anderen Ueberlegungen diesbezüglich angestellt.

Bei den heutigen, erheblich verbesserten Energiedämmsystemen ist es heute ohne prohibitive Mehrkosten möglich, sogenannte hochisolierte Gebäude zu erstellen. Insbesondere in Büro- und Gewerbegebäuden hat man bei solchen hochisolierten Bauwerken festgestellt, dass oft ein Wärmeenergieüberschuss vorhanden ist. Dieser Wärmeenergieüberschuss muss abgeführt werden. Da aber nicht generell ein Wärmeüberschuss vorhanden ist, benötigt man natürlich trotzdem eine Heizung. Bisher hat man normalerweise den Energieüberschuss über Lüftungssysteme abgeführt. Versuche haben nun in letzter Zeit gezeigt, dass bei Gebäuden, die mit Boden- und/oder Deckenplatten-Heizungs-Systemen ausgerüstet sind und mittels geothermischer Energie gespiesen werden, auch die überschüssige Wärmeenergie über dasselbe System, über welches Wärme zugeführt wird ebenso Wärme abgeführt werden kann und wieder an das Erdreich abgegeben werden kann. Für ein so zu betreibendes Heizungssystem waren die bisherigen Verfahren nicht optimal.

Es ist daher die Aufgabe der vorliegenden Erfindung, ein Verfahren gemäss Oberbegriff des Patentanspruches 1 zu schaffen, bei dem man unter Nutzung von geothermischer Energie optimal arbeiten kann. Ferner wird ein Mittel vorgeschlagen zur Ausübung des erwähnten erfinderischen Verfahrens.

Bezüglich der Mittel zur Realisation einer Boden- bzw. Deckenheizung kann rein beispielsweise auf die folgenden Schutzrechte hingewiesen werden, nämlich EP-A-0'662'547, EP-A-0'278'489 oder EP-B-0'074'490. All diese Systeme zeigen mehrlagige Platten, bei denen die Rohre eines Rohrregisters möglichst einfach und schnell nahe den Oberflächen verlegt werden können.

Von diesem Trend völlig abweichend zeigt die EP-A-0'385'148 eine Bodenheizung, bei der Heizungsrohre einer Bodenplatte aus Beton innerhalb eines Bewehrungsgitters verlegt werden. Bei einer solchen Betonplatte, die im Ortsbetonbau erstellt wird, befinden sich die Heizungsrohre eines Registers relativ genau im Zentrum der Betonplatte. Die Ueberlegung, die zu dieser Variante geführt hat, besteht darin, dass man der Meinung war, dass Heizungsrohre, die beispielsweise in der oberen Bewehrungsebene angeordnet sind, zu Druckspannungen im oberen Bereich der Platten führen und dass man folglich, um Temperaturdifferenzen in der Betonplatte zu vermeiden, die Heizungsrohre weder auf noch unter derselben anordnen solle und schon gar nicht in Bezug auf die Plattenhöhe exzentrisch darin anbringen solle, sondern vielmehr die Heizungsrohre zentrisch in der Betonplatte anbringen solle. In diesem Dokument ist weder ein Hinweis auf die Temperaturen gemacht, die hier zur Anwendung kommen, noch wird auf die zu verwendende Energie hingewiesen. Für die bis heute bekannten Verfahren zur Raumtemperaturerzeugung ist eine solche Anordnung der Heizungsrohre für den Fachmann erkenntlich unrichtig bzw. praktisch nicht steuerbar. Die Trägheit einer solchen Heizung, wenn sie wie bisher bekannt in den Temperaturbereichen von üblichen Niedertemperaturheizungen oder gar Mittel- oder Hochtemperaturheizungen verwendet werden würde, wäre eine pendelnde Temperaturführung die Folge. Aus diesem Grund konnte der Fachmann auf dem Gebiet der Boden- und Deckenheizungen aus dieser Offenbarung keine brauchbare Lösung entnehmen.

In der Zeichnung sind zwei Ausführungsbeispiele von Mitteln zur Ausübung des erfindungsgemässen Verfahrens dargestellt. Es zeigt:
- Figur 1: einen Vertikalschnitt durch eine Bodenplatte senkrecht zur Verlaufsrichtung der Heiz- bzw. Kühlrohre;
- Figur 2: einen ebensolchen Vertikalschnitt durch eine Deckenplatte, die als Vollmontagedecke konzipiert ist und
- Figur 3: einen Verlegeplan zur Verlegung eines Rohrregisters in einer Bodenplatte.
- Figur 4: einen grafischen Vergleich bekannter Heizverfahren mit dem erfindungsgemässen Heizverfahren.

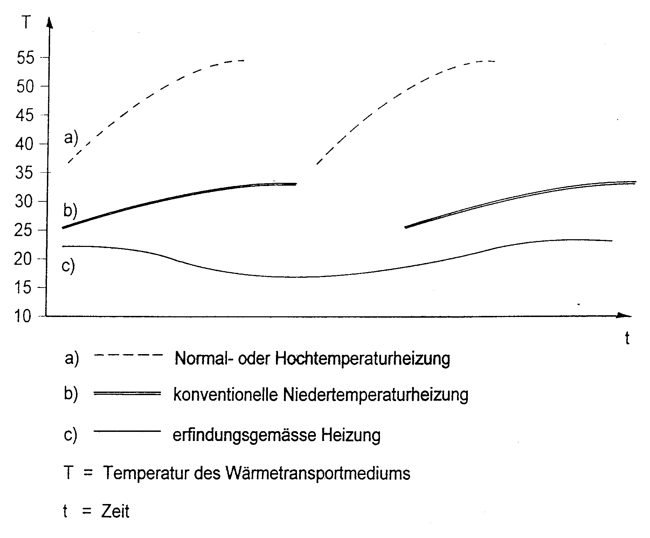

Wenn nachfolgend in dieser Beschreibung von Heizen oder Heizverfahren gesprochen wird, so wird hierbei lediglich dem allgemeinen Sprachgebrauch gefolgt. Fachmännisch soll hierunter jedoch ganz generell die Raumtemperaturerzeugung verstanden werden. Hierbei interessieren lediglich die sogenannten Boden- beziehungsweise Deckenheizungen, bei denen in der Boden- und/oder Deckenplatte Rohrsysteme verlegt sind, durch welche ein Wärmetransportmedium gepumpt wird. In der Figur 4 ist grafisch dargestellt, wie der Temperaturverlauf des Wärmetransportmediums über die Zeit bei verschiedenen Heizverfahren typischerweise aussieht. Die oberste Kurve a symbolisiert den Temperaturverlauf des Heizmediums bei einer Normaltemperatur- oder Hochtemperaturheizung. Das Wärmetransportmedium wird dabei über eine relativ grosse Bandbreite aufgeheizt und durch Abgabe an den Raum wieder abgekühlt. Die Einsatzzeiten der Heizung sind relativ kurz und die Ruhezeiten eher länger als die Heizungszeiten. Der übliche Temperaturbereich des Wärmetransportmediums varriert hierbei zwischen 30 und 70°C, häufig jedoch eher zwischen 35 und 60°C, wie hier dargestellt. Eine solche Heizung spricht sehr schnell an und ist insbesondere im Wohnbereich und bei kleineren Baueinheiten üblich. Normalerweise werden diese Heizungen mit nicht erneuerbaren Energieformen gespiesen. Insbesondere handelt es sich hierbei um Heizungsanlagen mit Brennkammern.

Die Steuerung solcher Heizungsanlagen erfolgt üblicherweise über eine Kombination von Thermostaten, welche die Raumtemperatur und die Aussenlufttemperatur berücksichtigen.

Die Kurve b zeigt wiederum den Verlauf der Temperatur eines Wärmetransportmediums während eines Zeitraumes, diesmal jedoch bei einer bekannten Niedertemperaturheizung. Niedertemperaturheizungen sind vor allem im Einsatz bei Heizungsanlagen, die mit erneuerbaren Energien betrieben werden, wie beispielsweise mit thermischen Sonnenkollektoranlagen oder geothermisch gespiesenen Anlagen. Der hier übliche Temperaturbereich des Wärmetransportmediums schwankt zwischen 25 und 35°C. Bedingung ist dabei, dass das Gebäude einen relativ hohen Isolationsstandard aufweist. Bei solchen Anlagen sind üblicherweise die Heizeinsatzzeiten länger, ebenso die Stillstandzeiten der Heizungsanlage. Wiederum wird die Heizung mittels Thermostaten gesteuert, die die Raumtemperatur und die Aussentemperatur berücksichtigen. Eine solche Heizanlage ist gegenüber der vorher beschriebenen relativ träge und die Raumtemperaturschwankungen im Gebäude merklich. Auch diese Anlagen sind eher im Wohnungsbau üblich aber auch bei Anlagen, bei denen industrielle Abwärme zur Heizung genutzt wird.

Das erfindungsgemässe Verfahren wird repräsentiert durch die Kurve c. Der Temperaturbereich, in dem sich das Wärmetransportmedium bewegt, liegt hier zwischen 12° und 25°C oder wie hier dargestellt normalerweise zwischen 22,5° und 16°C. Ein derart geringes Temperaturgefälle ist nur erreichbar bei hochisolierten Gebäuden, die mit einem Boden- und/oder Deckenplattensystem geheizt werden, welches die erfindungsgemässen Mittel aufweist. Denn zwingend muss hier mit einem grossen Wärmespeicher gearbeitet werden, um die hier dargestellte flache Temperaturkurve zu erzielen. Entsprechend wird nicht wie üblich bei Boden- bzw. Deckenheizungen die Bodenplatte bzw. Deckenplatte als Konvektionsfläche zur Wärmeabgabe genutzt, sondern insbesondere als Speichervolumen genutzt. Entsprechend werden die Rohre des Rohrsystemes nicht möglichst nahe der Abstrahlfläche angeordnet und gegenüber dem Kern der Platte isoliert, wie dies bis heute üblich ist, sondern die Platte selber wird insgesamt möglichst auf einer gleichbleibenden Temperatur gehalten. Um dies zu erzielen, wird die Heizung so betrieben, dass die gesamte Betonplatte als Wärmespeicher genutzt wird. Bei einem solchen Verfahren entspricht die Raumtemperatur annähernd der Temperatur der betonierten Boden- und/oder Deckenplatte. Daher lässt sich eine solche Anlage auch ausgesprochen einfach regulieren. Zur Steuerung des Verfahrens genügt es praktisch, die Temperaturdifferenz des Wärmetransportmediums im Vorlaufstrang und im Rücklaufstrang zu ermitteln, um daraus festzustellen, ob der Boden- und/oder Deckenplatte Energie zugeführt oder abgeführt werden muss. Um dies zu ermöglichen, wird entsprechend eine solche Anlage mit einer Temperatur von ca. 10° bis 20°C im Bereich der geothermischen Sonde betrieben. Dies erlaubt mit einer relativ leistungsschwachen Wärmepumpe die eventuell erforderliche Energie zuzuführen bzw. überschüssige Energie aus dem Gebäude mittels dem Wärmetransportmedium in das Erdreich abzugeben. Insbesondere bei Büro- und Gewerbegebäuden hat man festgestellt, dass die Abwärme der Beleuchtung, Kopiergeräte und Rechnungsanlagen bzw. Produktionsanlagen derart viel Energie an die Umgebung abgibt, dass bei hochisolierten Gebäuden meist ein Energieüberschuss vorhanden ist. Lediglich bei extrem tiefen Aussentemperaturen oder nach längeren Betriebsunterbrüchen besteht ein Bedürfnis nach Energiezufuhr. Aus diesen Ueberlegungen heraus wurde das erfindungsgemässe Verfahren zur Raumtemperaturerzeugung entwickelt. Beim erfindungsgemässen Verfahren wird nun praktisch ununterbrochen Wärmetransportmedium in der gewünschten Temperatur dem Rohrsystem zugeführt. Hierbei wird wie eingangs erwähnt nicht wie üblich zwischen Heizen und Kühlen unterschieden. Diese Relation ist ohnehin problematisch, da bei einer geothermischen Heizungsanlage die Wärmedifferenz ausgehend von der Temperatur an der Erdsonde berücksichtigt werden müsste.

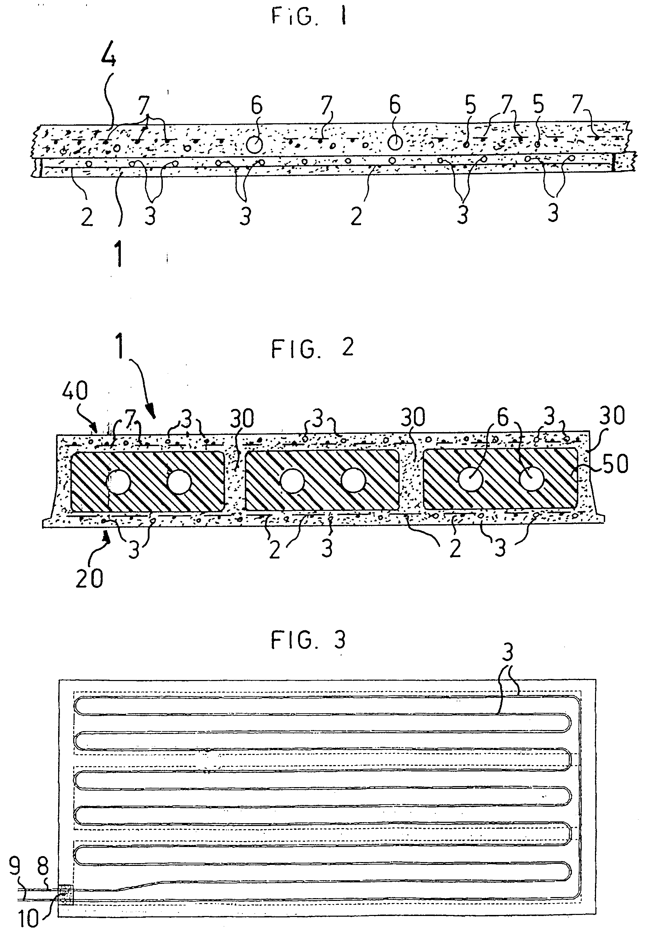

Voraussetzung für das erfindungsgemässe Verfahren zur Raumtemperaturerzeugung ist eine gute Nutzung der Bodenbeziehungsweise Deckenplatte als Wärmespeicher. Wie dies erreicht werden kann, wird anhand der in den Figuren 1 bis 3 dargestellten Ausführungsformen aufgezeigt.

In der Figur 1 ist eine sogenannte Teilmontagedecke dargestellt. Da eine solche Decke praktisch immer zwischen zwei Stockwerken angeordnet ist, stellt die Deckenplatte gleichzeitig auch eine Bodenplatte dar. Die Version nach der Figur 1 zeigt eine Decke, die aus einem vorgefertigten Betonelement hergestellt worden ist. Das vorgefertigte Betonelement ist hierbei eine reine Zugplatte, in der lediglich eine Zugarmierung untergebracht ist. Eine solche, vorgefertigte Zugplatte wird beim zu erstellenden Gebäude verlegt und darauf vor Ort eine Druckarmierung verlegt, entsprechende elektrische Leitungen und Kabel sowie eventuelle Lüftungszu- und ableitungen eingezogen und daraufhin ein Ortsbeton gegossen. Zwischen der vorgefertigten Betonplatte und der Betonplatte die als Ortsbetonplatte erstellt wird, werden keine GleitfolienIsoliermatten oder dergleichen angeordnet, so dass insgesamt eine monolithische Struktur entsteht. Damit ist sichergestellt, dass die Heizungsrohre bzw: Kühlrohre die Wärme des Wärmetransportmediums problemlos an das gesamte Speichermedium übergeben können, nämlich an die Betonplatte. Wegen der monolithischen Struktur ist dabei die Anordnung der Rohre, die das Kühl- bzw. Heizregister bilden, innerhalb der Betonplatte in Bezug auf deren Distanz zur Ober- bzw. Unterfläche kaum noch relevant. Wesentlich ist nur die relative Homogenität in Bezug auf die Wärmeleitfähigkeit der Platte. Eine solche Boden- bzw. Deckenplatte, die aus einem vorgefertigten Betonelement hergestellt ist, welche lediglich Zugarmierungen enthält sowie das Kühl- bzw. Heizregister ist relativ dünn und entsprechend leicht, weshalb es grossflächig gefertigt werden kann, ohne dabei unüberwindliche Transportprobleme zu stellen. Da alle anderen Verteilsysteme in der vor Ort darüber anzulegenden Betonplatte untergebracht werden können, ist eine solche Betonplatte auch äusserst flexibel in der Anwendung.

In der Zeichnung ist das vorgefertigte Betonelement mit 1 bezeichnet. Es besteht wie zuvor bereits beschrieben aus einer vorgefertigten Betonplatte, die eine Zugarmierung 2 enthält sowie ein Kühl- bzw. Heizregister mit entsprechenden Rohren 3. Ueber dem vorgefertigten Betonelement 1 ist eine Druckplatte 4 aus Ortsbeton gelegt. In der Ortsbetonplatte sind beispielsweise elektrische Leitungen 5 oder Lüftungsleitungen 6 verlegt. Die Druckarmierungen 7 werden ebenfalls erst an Ort und Stelle erstellt.

Wie die Rohrleitungen 3 in der vorgefertigten Betonplatte 1 vorteilhaft verlegt werden, ist in der Figur 3 dargestellt. Vorteilhafterweise wird man in einem ecknahen Bereich die Zufuhr- und Ableitungsstutzen des Rohrsystemes einer einzelnen Platte in einem randständigen Raumaussparkörper 10 münden lassen. Vorlaufstutzen 8 und Rücklaufstutzen 9 münden somit im gleichen Raumaussparkörper 10. Dieser wird normalerweise aus einem geschäumten Formkörper gefertigt. Nach Entfernung des Raumaussparkörpers 10 verbleibt hier genügend Raum, um die erforderlichen Verbindungen der Rück-Vorlaufstutzen mit dem Hauptvor- bzw. Hauptrücklaufstrang mittels Schweissmuffen herzustellen. Normalerweise verwendet man hierzu Elektroschweissmuffen.

In der Figur 2 ist eine sogenannte Vollmontagedecke dargestellt. Auch hier handelt es sich um ein vorgefertigtes Betonelement 1. Das gesamte vorgefertigte Betonelement besteht hier aus einer Zugplatte 20 und einer Druckplatte 40, die zueinander distanziert und über Längsstege 30 miteinander verbunden sind. Das vorgefertigte Betonelement 1 besteht somit wiederum monolithisch aus der Zugplatte 20, der Druckplatte 40 und den dazwischen angeordneten Längsstegen 30. Die so verbleibenden Längshohlräume 50 werden mit einem Wärmedämmmittel ausgefüllt. Die Längshohlräume 50 können aber auch in idealer Weise zur Verlegung von Leitungen genutzt werden.

Bei einer solchen Gestaltung wird man vorzugsweise sowohl in der Zugplatte 20 als auch in der Druckplatte 40 Rohre 3 als Heiz- bzw. Kühlregister verlegen. Zwischen den einzelnen vorgefertigten Betonelementen 1 gemäss der Figur 2 wird in Ortsbeton lediglich zwischen zwei benachbarten vorgefertigten Betonelementen noch je eine Längsrippe gegossen. Auch hier entfällt das Anbringen von Gleitfolien-Isolationsschichten und insbesondere auch wie in der erstbeschriebenen Lösung das Anbringen eines Estrichs. Während bei bekannten Lösungen die Heizrohrregister über der Betonplatte in der Estrichschicht verlegt sind, entfällt bei der erfindungsgemässen Lösung die Estrichschicht. Die Benutzungsoberfläche kann direkt auf der Ortsbetonplatte in der Ausführung nach Figur 1 oder auf der Druckplatte des vorgefertigten Elementes bei der Ausführung nach Figur 2 varlegt werden. Im Falle eines Produktions- oder Lagerraumes kann diese oberste Betonschicht direkt als Nutzoberfläche verwendet werden.

Die Verlegung von Heizungs- bzw. Kühlregisterrohren in einer vorgefertigten Boden- bzw. Deckenplatte wurde bisher nicht realisiert. Ohne die Nutzung des erfindungsgemässen Verfahrens zur Raumtemperaturerzeugung unter Verwendung geothermischer Energie machen aber solche vorgefertigten Betonelemente mit integrierter Boden- bzw. Deckenheizung keinen Sinn.

## Patentansprüche

1. Verfahren zur Raumtemperaturerzeugung in einem hierzu über eine Sonde mittels geothermischer Energie gespiesenen Gebäude mit Boden- und/oder Deckenplatten aus Beton und einem Rohrsystem mit Vor- und Rücklaufstrang, in dem ein Wärmetransportmedium umgewälzt wird, dadurch gekennzeichnet, dass die Wärme über ein in der Betonplatte eingegossenes Rohrsystem ab- beziehungsweise zugeführt und gespeichert wird, und dass das Wärmetransportmedium in einem Temperaturbereich von 20°-25°C zum Heizen und von 12°-20°C zum Kühlen gehalten wird.

2. Verfahren nach Anspruch 1, dadurch gekennzeichnet, dass die Anlage mit einer Temperatur von 10°-20°C im Bereich der geothermischen Sonde betrieben wird.

3. Verfahren nach Anspruch 1, dadurch gekennzeichnet, dass die Bodenplatte geheizt und die Deckenplatte gekühlt wird.

4. Verfahren nach Anspruch 1, dadurch gekennzeichnet, dass weitere Gebäudeteile zur Raumtemperaturerzeugung als Wärmespeicher genutzt werden.

5. Verfahren nach Anspruch 1, dadurch gekennzeichnet, dass die Temperatur des Wärmetransportmediums auf Grund der Temperaturdifferenz des Wärmetransportmediums im Vorlaufstrang zur Temperatur im Rücklaufstrang geregelt wird.

6. Mittel zur Ausübung des Verfahrens nach Anspruch 1, dadurch gekennzeichnet, dass die Boden- und/oder Deckenplatte ein vorgefertigtes Betonelement mit mindestens einer schlaffen oder vorgespannten Zugarmierung ist, in dem das zur Führung des Wärmetransportmediums erforderliche Rohrsystem eingegossen ist.

7. Mittel nach Anspruch 5, dadurch gekennzeichnet, dass das Rohrsystem einer einzelnen Platte ein einziges Rohrregister bildet, dessen Rück- und Vorlaufstutzen in einem einzigen randständigen Raumaussparkörper münden.

8. Mittel nach Anspruch 5, dadurch gekennzeichnet, dass das Rohrsystem in jeder Platte zwei übereinander verlegte Rohrregister bildet, wobei das eine Register der Heizung und das andere der Kühlung dient.

9. Mittel nach einem der Ansprüche 5-7, dadurch gekennzeichnet, dass das vorgefertigte Betonelement eine Zugplatte mit einer Zugarmierung ist, in der das ein Kühl- oder Heizregister bildende Rohrsystem verlegt ist.

10. Mittel nach einem der Ansprüche 5-7, dadurch gekennzeichnet, dass das vorgefertigte Betonelement eine Zugplatte mit Zugarmierung und eine Druckplatte mit Druckarmierung aufweist, wobei die Zugplatte mit der Druckplatte über mindestens zwei Längsstege miteinander verbunden sind, die mindestens einen Hohlraum begrenzen.

11. Mittel nach Anspruch 9, dadurch gekennzeichnet, dass das vorgefertigte Betonelement in der untenliegenden Zugplatte ein ein Kühlregister bildendes Rohrsystem und in der obenliegenden Druckplatte ein ein Heizregister bildendes Rohrsystem aufweist.

12. Mittel nach Anspruch 9, dadurch gekennzeichnet, dass zwischen je zwei benachbarten Längsstegen desselben vorgefertigten Betonelementes ein Fallkörper aus wärmedämmendem Material angeordnet ist.
